# EUROPÄISCHE PATENTSCHRIFT

(11) **EP 4 399 495 B1**
(45) Veröffentlichungstag und Bekanntmachung des Hinweises auf die Patenterteilung: **14.05.2025**
(21) Anmeldenummer: 22764407.7
(22) Anmeldetag: 10.08.2022
(51) Int. Cl.: G01F 1/84

(54) **MESSAUFNEHMER ZUM MESSEN EINES MASSEDURCHFLUSSES**
TRANSDUCER FOR MEASURING A MASS FLOW
TRANSDUCTEUR POUR MESURER UN DÉBIT MASSIQUE

(30) Priorität: 09.09.2021 DE 102021123415
(43) Veröffentlichungstag der Anmeldung: 17.07.2024
(73) Patentinhaber: Endress+Hauser Flowtec AG, 4153 Reinach (CH)
(72) Erfinder: SCHWENTER, Benjamin, 4107 Ettingen (CH); SCHÜTZE, Christian, 4055 Basel (CH); WERNER, Marc, 79639 Grenzach-Wyhlen (DE); BITTO, Ennio, 4147 Aesch (CH); MUNDSCHIN, Dieter, 4410 Liestal (CH)
(74) Vertreter: Endress + Hauser Group Services (Deutschland) AG+Co. KG
(86) Internationale Anmeldenummer: PCT/EP2022/072438
(87) Internationale Veröffentlichungsnummer: WO 2023/036544

(56) Entgegenhaltungen:
- WO-A1-2019/081169
- WO-A1-2019/170742
- DE-A1- 102004 021 690
- DE-A1- 102010 030 340
- DE-B3- 102019 105 736

## Beschreibung

Die vorliegende Erfindung betrifft einen Messaufnehmer zum Messen eines Massedurchflusses mit einer einzigen schwingfähigen Messrohrleitung.

Gattungsgemäße Messaufnehmer sind beispielsweise beschrieben in der Offenlegungsschrift DE 039 16 285 A1, der Veröffentlichung EP 518 124 A1 sowie der noch unveröffentlichten Patentanmeldung DE 10 2015 122 146.2. Messaufnehmer mit einem einzigen Messrohr sind insofern vorteilhaft, als sie keine Strömungsteiler enthalten. Anders als bei Messaufnehmern mit zwei Messrohren, die symmetrisch gegeneinander schwingen, ist es jedoch bei Messaufnehmern mit nur einem einzigen Messrohr schwieriger eine Wechselwirkung mit der Umgebung durch Auskoppeln von Schwingungsenergie einer Biegeschwingungsnutzmode bzw. durch Einkoppeln von störenden Schwingungen aus der Umgebung zu vermeiden. Die Offenlegungsschrift DE 10 2010 030 340 A1 offenbart hierzu einen Messaufnehmer mit einem einzigen Messrohr, bei dem das Messrohr zwei parallel geführte Schleifen aufweist, die gegeneinander schwingen und sich insoweit gegenseitig balancieren. Für diesen Messaufnehmertyp ist jedoch aufgrund des Verlaufs der Messrohrleitung in Schleifen eine Entleerbarkeit des Messrohrs prinzipiell ausgeschlossen, während gattungsgemäße Messaufnehmer grundsätzlich entleerbar gestaltet sein können.

Als einen Beitrag, um eine Wechselwirkung mit der Umgebung durch Auskoppeln von Schwingungsenergie einer Biegeschwingungsnutzmode bzw. durch Einkoppeln von störenden Schwingungen aus der Umgebung zu vermeiden, beschreibt EP 518 124 A1 eine Frequenztrennung zwischen den Schwingungen der Messrohrleitung und Schwingungen anderer Komponenten des Messaufnehmers.

Aus der WO 2018/219603 A1 und der WO 2019/170742 A1 ist jeweils ein vibronischer Messaufnehmer mit genau einer S-förmigen Messrohrleitung bekannt, welche mit einer gegen dem Messaufnehmergehäuse federnd gelagerten Trägerplatte verbunden ist. Bei derartigen vibronischen Messaufnehmern können bei der Messrohrleitung - insbesondere beim Transport oder bei einem fehlerhaften Einbau des Messaufnehmers - trotzdem Störmoden auftreten, die zu Kollisionen zwischen Spulen und Magneten der Schwingungssensoren und/oder des Schwingungserreger führen können.

Der Erfindung liegt die Aufgabe zugrunde dem Problem abzuhelfen.

Die Aufgabe wird erfindungsgemäß durch den vibronischen Messaufnehmer gemäß dem unabhängigen Patentanspruch 1 gelöst.
Der erfindungsgemäße vibronischen Messaufnehmer zum Messen des Massendurchflusses eines strömungsfähigen Mediums, umfassend:
- einen Leitungseinlaufabschnitt;
- einen Leitungsauslaufabschnitt;
- eine schwingfähige Messrohrleitung zum Führen des Mediums,
   wobei die Messrohrleitung in ihrer Ruhelage in einer Rohrleitungsebene gebogen ist,
   wobei die Messrohrleitung einlaufseitig an den Leitungseinlaufabschnitt und auslaufseitig an den Leitungsauslaufabschnitt anschließt und über letztere an eine Rohrleitung anschließbar ist;
- ein Messaufnehmergehäuse,
   wobei der Leitungseinlaufabschnitt und der Leitungsauslaufabschnitt jeweils fest mit dem Messaufnehmergehäuse verbunden sind;
- mindestens einen Schwingungserreger zum Anregen von Biegeschwingungen der Messrohrleitung in einer Biegeschwingungsnutzmode; und
- mindestens zwei Schwingungssensoren zum Erfassen von Schwingungen der Messrohrleitung,
   wobei der mindestens eine Schwingungserreger eine Erregerspule und/oder die mindestens zwei Schwingungssensoren jeweils eine Sensorspule umfassen,
   wobei der mindestens eine Schwingungserreger einen Erregermagneten und/oder die mindestens zwei Schwingungssensoren jeweils einen Sensormagneten umfassen,
   wobei der Erregermagnet und/oder der Sensormagnet an der Messrohrleitung angeordnet ist,
   wobei sich der Erregermagnet durch eine Spulenöffnung der Erregerspule erstreckt und/oder sich der Sensormagnet durch eine Spulenöffnung der Sensorspule erstreckt,
   dadurch gekennzeichnet, dass die Erregerspule und/oder die Sensorspule eine elongierte Grundform aufweist,
   wobei die Grundform einen Schwerpunkt aufweist, durch den ein größter Durchmesser mit einer Länge *d*₁ und ein kleinster Durchmesser mit einer Länge *d*₂ verläuft,
   wobei die Erregerspule und/oder die Sensorspule in einer Querschnittsebene eine erste Spulenachse und eine zweite Spulenachse aufweist,
   wobei der größte Durchmesser *d*₁ in der ersten Spulenachse liegt,
   wobei der kleinste Durchmesser *d*₂ in der zweiten Spulenachse liegt,
   wobei für einen Quotienten *d*₁/*d*₂ gilt, dass 1,15 ≤ *d*₁/*d*₂, insbesondere 1,5 ≤ *d*₁/*d*₂ und bevorzugt 2 ≤ *d*₁/*d*₂ ist,
      wobei die Messrohrleitung derart ausgebildet ist, dass bei einem Schwingen der Messrohrleitung in einer, insbesondere kleinsten In-Plane Mode eine Auslenkungsrichtung der Messrohrleitung in einem Bereich des Erregermagneten und/oder des Sensormagneten parallel zur ersten Spulenachse orientiert ist.

Vorteilhaft an der Ausgestaltung ist, dass somit eine variable Beabstandung zwischen dem Erregermagneten und der Erregerspulen und/oder zwischen dem mindestens einen Sensormagneten und der entsprechenden Sensorspule erreicht wird. Dies hat zur Folge, dass beim Auftreten bestimmter Störmoden einer Kollision zwischen der Spule und des sich in der Spulenöffnung bewegenden Magneten vorgebeugt wird. Dies ist besonders bei Magneten vorteilhaft, welche in die Spulenöffnung der Spule eingetaucht sind bzw. zumindest abschnittsweise durch die Spule umschlossen sind.

Vorteilhafte Ausgestaltung der Erfindung sind Gegenstand der Unteransprüche.
Eine Ausgestaltung sieht vor, dass für den Quotienten *d*₁/*d*₂ gilt, dass *d*₁/*d*₂ ≤ 10, insbesondere *d*₁/*d*₂ ≤ 7,5 und bevorzugt *d*₁/*d*₂ ≤ 3 ist.
Eine Ausgestaltung sieht vor, dass der Erregermagnet und/oder der Sensormagnet einen Magnetdurchmesser mit einer Länge *d_{M}* aufweist,
wobei die Länge des Magnetdurchmessers *d_{M}* kleiner ist als die Länge *d*₂ des kleinsten Durchmessers,
wobei für einen Quotienten *d*₂/*d_{M}* gilt, dass 1 *< d*₂/*d_{M}* ≤ 2, insbesondere 1,2 *≤ d*₂/*d_{M}* ≤ 1,8 und bevorzugt 1,3 *≤ d*₂/*d_{M} ≤* 1,4.

Zur Lösung der gestellten Aufgabe kann im einfachsten Fall der Durchmesser der runden Spulenöffnung erhöht werden. Dadurch erhöht sich jedoch gleichzeitig auch die Beabstandung zwischen Magnet und Spule in Bereichen, die nicht durch Störschwingungsmoden betroffen sind, was zu einer geringeren Messempfindlichkeit führt. Die beiden zuvor genannten Ausgestaltungen haben den Vorteil, dass somit die Beabstandung zwischen Magnet und Spule möglichst gering ist - wodurch eine hohe Messempfindlichkeit erreicht wird - und gleichzeitig der Magnet kollisionsfrei schwingen kann.
Eine Ausgestaltung sieht vor, dass die Messrohrleitung einen zumindest abschnittsweise S-förmigen Verlauf aufweist,
wobei in der Rohrleitungsebene eine Längsachse existiert, zu welcher die Rohrleitungsachse an keinem Punkt einen Winkel von mehr als 85°, insbesondere nicht mehr als 83° aufweist.

Vorteilhaft an dieser Ausgestaltung ist, dass bei einer vertikalen Orientierung der Längsrichtung des Messaufnehmers relativ zur Gravitationsrichtung damit die Entleerbarkeit des Messrohrleitung gewährleistet wird.
Eine Ausgestaltung sieht vor, dass die erste Spulenachse die Längsachse mit einem Winkel *α* schneidet,
wobei der Winkel *α* ein Winkelmaß von 0° bis 15°, insbesondere 4° bis 10° und bevorzugt 6° bis 8° aufweist.

Es hat sich herausgestellt, dass für derartige Ausgestaltungen mit einer S-förmigen Messrohrleitung ein kollisionsfreies Schwingen der Magneten auch bei auftretenden Störschwingungsmoden von weniger als 1000 Hz gewährleistet werden kann.
Eine Ausgestaltung umfasst:
- ein Tragsystem mit einer Trägerplatte mindestens einem einlaufseitigen Lagerkörper und mindestens einem auslaufseitigen Lagerkörper
   wobei das Tragsystem Tragsystemschwingungsmoden aufweist die elastische Verformungen der Trägerplatte umfassen,
   wobei die Messrohrleitung mittels des einlaufseitigen Lagerkörpers und mittels des auslaufseitigen Lagerkörpers mit der Trägerplatte fest verbunden und durch die Lagerkörper begrenzt ist.
   Eine Ausgestaltung sieht vor, dass eine Verbindungsachse den mindestens einen einlaufseitigen Lagerkörper und den mindestens einen auslaufseitigen Lagerkörper verbindet,
   wobei die erste Spulenachse die Verbindungsachse mit einem Winkel β schneidet,
   wobei der Winkel *β* ein Winkelmaß von 0° bis 30°, insbesondere 4° bis 20° und bevorzugt 6° bis 10° aufweist.

Gerade bei Messaufnehmern mit einem Tragsystem - umfassend eine Trägerplatte und zwei Lagerkörpern - reduziert sich auf Grund des erfindungsgemäßen Winkelbereiches des Winkels *β* die Wahrscheinlichkeit, dass Defekte auf Grund von Kollisionen zwischen Magnet und Spulen auftreten.
Eine Ausgestaltung sieht vor, dass die Messrohrleitung zwischen den beiden Lagerkörpern zwei äußere gerade Abschnitte und einen zentralen geraden Abschnitt aufweist, die durch zwei kreisbogenförmige Abschnitte verbunden sind,
wobei die beiden Lagerkörper jeweils an den äußeren geraden Abschnitten angeordnet sind.
Eine Ausgestaltung sieht vor, dass die Eigenfrequenzen der Translationsschwingungsfreiheitsgrade und Rotationsschwingungsfreiheitsgrade der Trägerplatte nicht weniger als 100 Hz insbesondere nicht weniger als 150 Hz und/oder nicht weniger als 200 Hz betragen.
Eine Ausgestaltung sieht vor, dass der größte Durchmesser so gewählt ist, dass bei einem Schwingen der Messrohrleitung in der niedrigsten In-Plane Mode der Erregermagnet kollisionsfrei in der Spulenöffnung der Erregerspule schwingt und/oder der Sensormagnet kollisionsfrei in der Spulenöffnung der Sensorspule schwingt.
Eine Ausgestaltung sieht vor, dass die niedrigste In-Plane Mode in einem Frequenzbereich von kleiner 1000 Hz, insbesondere kleiner 300 Hz liegt.

Die Erfindung wird anhand der nachfolgenden Figuren näher erläutert. Es zeigt:
Fig. 1: eine Ausgestaltung des erfindungsgemäßen vibronischen Messaufnehmers; und
Fig. 2: einen Querschnitt durch den Schwingungserreger bzw. Schwingungssensor.

Der Messaufnehmer 100 umfasst eine Messrohrleitung 10 mit einem ersten geraden äußeren Abschnitt 11 einem zweiten geraden äußeren Abschnitt 12 und einen zentralen geraden Abschnitt 13 sowie einen ersten gebogenen Abschnitt 15 und einen zweiten gebogenen Abschnitt 16. Die beiden geraden äußeren Abschnitte 15, 16 sind jeweils mittels eines der gebogenen Abschnitte 15, 16 mit dem zentralen geraden Abschnitt 13 verbunden. Daraus ergibt sich ein zumindest abschnittsweise S-förmiger Verlauf der Messrohrleitung 10. Die Messrohrleitung 10 ist durch genau zwei Lagerkörper 21, 22 begrenzt, und mit letzteren an einer biegesteifen Trägerplatte 30 befestigt.

Die schwingfähige Messrohrleitung 10 verläuft im Wesentlichen in einer zur Trägerplatte 30 parallelen Rohrleitungsebene. Die Messrohrleitung 10 weist eine zweizählige Rotationssymmetrie um eine Symmetrieachse auf, die senkrecht zur Rohrleitungsebene durch einen Punkt C2 in der Mitte des zentralen Rohrleitungsabschnitts verläuft. Die Messrohrleitung 10 hat einen Innendurchmesser von beispielsweise 5 mm oder weniger. Es ist aus einem Metall, insbesondere Edelstahl oder Titan gefertigt. Die metallische Trägerplatte 30 weist eine Stärke von beispielsweise 5 mm auf. Die Trägerplatte 30 weist vier spiralförmige Federlager 31, 32, 32, 33, 34 auf, die insbesondere mittels eines Lasers freigeschnitten sind, und die zueinander ebenfalls die zweizählige Rotationssymmetrie bezüglich der Symmetrieachse durch den Punkt C2 aufweisen. Mit hier nicht dargestellten Lagerbolzen, die im Zentrum der Federlager fixiert sind, ist die Trägerplatte 30 an einer Gehäuseplatte 40 eines Messaufnehmergehäuses verankert.

Das Tragsystem weist Tragsystemschwingungsmoden auf die elastische Verformungen der Trägerplatte 30 umfassen. Dabei beträgt die Eigenfrequenzen der Translationsschwingungsfreiheitsgrade und Rotationsschwingungsfreiheitsgrade der Trägerplatte 30 nicht weniger als 100 Hz insbesondere nicht weniger als 150 Hz und/oder nicht weniger als 200 Hz. Zudem liegt die niedrigste In-Plane Mode in einem Frequenzbereich von größer 1000 Hz.

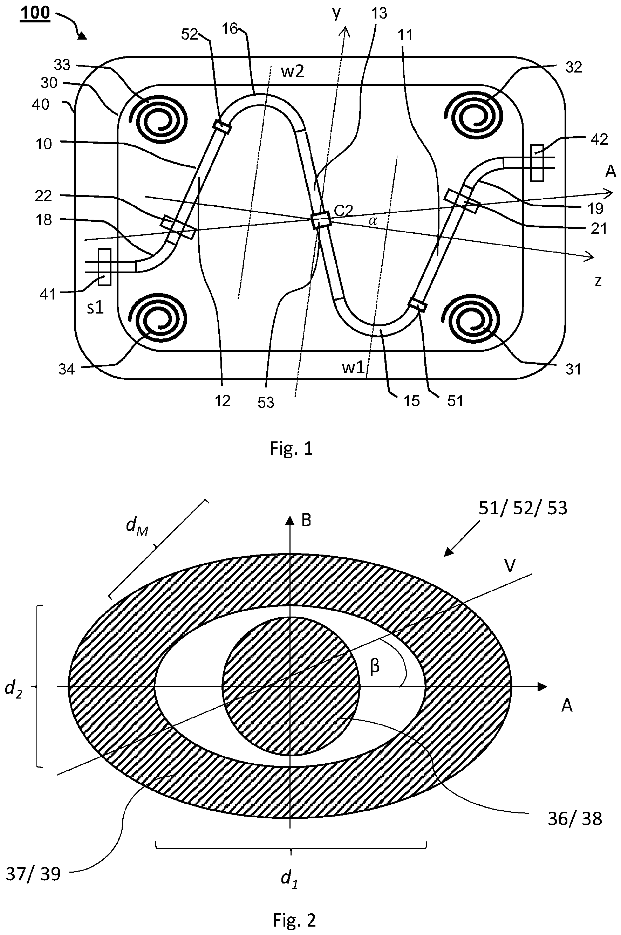

Durch die Federlager 31, 32, 33, 34 werden Resonanzschwingungen mit häufig in Prozessanlagen vorkommenden Vibrationen von bis zu 50 Hz vermeidet. Um die durch die Federlager 31, 32, 33, 34 erreichte weiche Aufhängung der Trägerplatte nicht zu beeinträchtigen, ist die Messrohrleitung über einen hinreichend weichen Leitungseinlaufabschnitt 18 und einen hinreichend weichen Leitungsauslaufabschnitt 19 an eine Rohrleitung anschließbar. Das Gehäuse weist einen erstes und zweites Gehäuselager 41, 42 auf, die fest mit der Gehäuseplatte 40 verbunden sind, und an denen der Leitungseinlaufabschnitt 18 und der Leitungsauslaufabschnitt 19 fixiert sind, um eine Übertragung von Schwingungen der Rohrleitung auf die Messrohrleitung über den Leitungseinlaufabschnitt 18 und den Leitungsauslaufabschnitt 19 zu unterdrücken. Die Translations- und Rotationsschwingungsfreiheitsgrade der Trägerplatte 30 haben jeweils Eigenfrequenzen *fᵢ*, die proportional sind zur Wurzel aus einem Quotienten aus einer Richtgröße *kᵢ* und einem Trägheitsterm *mᵢ,* also *fᵢ* ∝ (*kᵢ*/*mᵢ*)^{1/2}*.* Der Leitungseinlaufabschnitt 18 und der Leitungsauslaufabschnitt tragen in Summe nicht mehr als 10% zur jeweiligen Richtgröße *kᵢ* bei. In Fig.1 sind der der Leitungseinlaufabschnitt 18 und der Leitungsauslaufabschnitt 19 im Wesentlichen schematisch dargestellt.

Wie weiter in Fig. 1 dargestellt, weist der Messaufnehmer 100 zum Erfassen der Schwingungen der Messrohrleitung einen ersten elektrodynamischen Schwingungssensor 51 und einen zweiten elektrodynamischen Schwingungssensor 52 auf. Die beiden Schwingungssensoren 51, 52 sind hier jeweils auf einem der beiden geraden äußeren Abschnitte 11, 12 nicht mehr als einen Krümmungsradius der gebogenen Abschnitte 15, 16 von dem angrenzenden gebogenen Abschnitt angeordnet. Zum Anregen von Biegeschwingungen, insbesondere F3 Biegeschwingungen weist der Messaufnehmer einen elektrodynamischen Schwingungserreger 53 auf, der im Zentrum C2 der zweizähligen Rotationssymmetrie angeordnet ist, und in Richtung der Symmetrieachse wirkt. Die Schwingungssensoren 51, 52 weisen jeweils einen an der Messrohrleitung 10 angeordneten Sensormagneten auf. Der Schwingungserreger 53 weist einen ebenfalls an der Messrohrleitung 10 angeordneten Erregermagneten und eine elongierte Erregerspule auf. Dabei kann die Erregerspule an einer Haltvorrichtung befestigt sein, welche mit der Trägerplatte 30 verbunden ist. Die Erregerspule weist eine erste Spulenachse A auf, welche durch den größten Durchmesser verläuft. Die Erregerspule ist derart angeordnet, dass die erste Spulenachse A die Längsachse Z der Messrohrleitung 10 mit einem Winkel *α* schneidet, wobei der Winkel *α* ein Winkelmaß von 0° bis 15°, insbesondere 4° bis 10° und bevorzugt 6° bis 8° aufweist. Die Sensorspulen können ebenfalls eine elongierte Grundform aufweisen und die Orientierungsbedingung der Erregerspule relativ zur Längsachse Z erfüllen. Die Erregerspule und/oder die Sensorspule umfassen üblicherweise einen aufgewickelten Spulendraht, welcher eine isolierende Beschichtung aufweist. Zusätzlich kann die Erregerspule und/oder die Sensorspule einen insbesondere elektrisch isolierenden Spulenkörper aufweisen, welcher derart ausgebildet ist, dass der Magnet ebenfalls mit diesem kollidieren kann. Durch die erfindungsgemäße Lösung wird auch dies verhindert.

Das Zentrum C2 ist Ursprung eines Koordinatensystems zur Beschreibung weiterer Gesichtspunkte der Erfindung. Die Messrohrleitung 10 liegt in einer y-z-Ebene, wobei die y-Achse parallel zu Winkelhalbierenden *w*1*, w*2 verläuft, die jeweils zwischen einer Rohrachse der geraden äußeren Abschnitte 11, 12 und der Rohrachse des zentralen geraden Abschnitts 13 verlaufen. Die z-Achse verläuft senkrecht zur y-Achse in der Rohrleitungsebene und definiert eine Längsachse des Messaufnehmers 100. Die Längsachse Z weist an keinem Punkt zur Rohrleitungsachse einen Winkel von mehr als 85°, insbesondere nicht mehr als 83° aufweist Wenn diese Längsachse senkrecht angeordnet ist, ist der Messaufnehmer optimal entleerbar. Die Neigung der geraden Abschnitte ist dann gleich dem halben Winkel zwischen einer Rohrachse der geraden äußeren Abschnitte 11, 12 und der Rohrachse des zentralen geraden Abschnitts 13. Beim bevorzugten Ausführungsbeispiel der Erfindung beträgt diese Neigung 7°. Die Messrohrleitung 10 ist derart ausgebildet, dass bei einem Schwingen der Messrohrleitung 10 in einer, insbesondere kleinsten In-Plane Mode eine Auslenkungsrichtung der Messrohrleitung 10 in einem Bereich des Erregermagneten und/oder des Sensormagneten parallel zur ersten Spulenachse A orientiert ist.

Die Fig. 2 zeigt einen Querschnitt durch den mindestens einen Schwingungserreger 53 bzw. durch einen Schwingungssensor der mindestens zwei Schwingungssensoren 51, 52. Der mindestens eine Schwingungserreger 53 umfasst eine Erregerspule 37 und einen Erregermagneten 36. Der Erregermagnet 36 ist an der Messrohrleitung angeordnet. Die Schwingungssensoren 51, 52 umfassen jeweils eine Sensorspule 39 und einen Sensormagneten 38. Der Sensormagnet 38 ist ebenfalls an der Messrohrleitung angeordnet. Die im Folgenden genannten Ausgestaltungen können sich jeweils auf die Sensorspulen und die Sensormagnete und/oder auf die Erregerspule und den Erregermagneten beziehen. Deshalb wird im Folgenden der Begriff Spule an Stelle von Sensorspule und Erregerspule und der Begriff Magnet an Stelle des Sensormagneten und des Erregermagneten verwendet.

Der Magnet erstreckt sich durch eine Spulenöffnung der Spule. Die Spulenöffnung weist eine elongierte Grundform, insbesondere eine ründliche konvexe Grundform mit einem Schwerpunkt, durch den ein größter Durchmesser mit einer Länge *d*₁ und ein kleinster Durchmesser mit einer Länge *d*₂ verläuft. Die Spule weist in einer Querschnittsebene eine erste Spulenachse A und eine zweite Spulenachse B auf. Dabei liegt der größte Durchmesser *d*₁ in der ersten Spulenachse A und der kleinste Durchmesser *d*₂ in der zweiten Spulenachse B. Die jeweiligen Durchmesser sind so gewählt, dass für einen Quotienten *d₁*/*d₂* gilt, dass 1,15 ≤ *d*₁/*d*₂, insbesondere 1,5 ≤ *d*₁/*d*₂ und bevorzugt 2 ≤ *d*₁/*d*₂ ist, und weiterhin dass *d*₁/*d*₂ ≤ 10, insbesondere *d*₁/*d*₂ ≤ 7,5 und bevorzugt *d*₁/*d*₂ ≤ 3 ist. Gemäß der abgebildeten Ausgestaltung verläuft die erste Spulenachse A orthogonal zur zweiten Spulenachse B. Der Magnet weist einen Magnetdurchmesser mit einer Länge *d_{M}* auf. Die Länge des Magnetdurchmessers *d_{M}* ist kleiner als die Länge *d*₂ des kleinsten Durchmessers, insbesondere sind die Durchmesser so gewählt, dass für einen Quotienten *d*₂/*d_{M}* gilt, dass 1 *< d*₂/*d_{M}* ≤ 2, insbesondere 1,2 ≤ *d*₂/*d_{M}* ≤ 1,8 und bevorzugt 1,3 ≤ *d*₂/*d_{M}* ≤ 1,4 ist. Der Schwingungssensor und/oder der Schwingungserreger ist an einem Messaufnehmer mit einem Tragsystem mit einer Trägerplatte, mindestens einem einlaufseitigen Lagerkörper und mindestens einem auslaufseitigen Lagerkörper angeordnet, siehe Fig. 1. Die Spule ist derart an der Messrohrleitung angeordnet, dass eine Verbindungsachse V - welche den mindestens einen einlaufseitigen Lagerkörper und den mindestens einen auslaufseitigen Lagerkörper verbindet - und die erste Spulenachse A mit einem Winkel *β* schneiden. Der Winkel *β* weist dabei vorteilhafterweise ein Winkelmaß von 0° bis 30°, insbesondere 4° bis 20° und bevorzugt 6° bis 10° auf.

## Patentansprüche

1. Vibronischer Messaufnehmer (100) zum Messen des Massendurchflusses eines strömungsfähigen Mediums, umfassend:
- einen Leitungseinlaufabschnitt (18);
- einen Leitungsauslaufabschnitt (19);
- eine schwingfähige Messrohrleitung (10) zum Führen des Mediums,
wobei die Messrohrleitung (10) in ihrer Ruhelage in einer Rohrleitungsebene gebogen ist,
wobei die Messrohrleitung (10) einlaufseitig an den Leitungseinlaufabschnitt (18) und auslaufseitig an den Leitungsauslaufabschnitt (19) anschließt und über letztere an eine Rohrleitung anschließbar ist;
- ein Messaufnehmergehäuse (40),
wobei der Leitungseinlaufabschnitt (18) und der Leitungsauslaufabschnitt (19) jeweils fest mit dem Messaufnehmergehäuse (40) verbunden sind;
- mindestens einen Schwingungserreger (53) zum Anregen von Biegeschwingungen der Messrohrleitung (10) in einer Biegeschwingungsnutzmode; und
- mindestens zwei Schwingungssensoren (51, 52) zum Erfassen von Schwingungen der Messrohrleitung (10),
wobei der mindestens eine Schwingungserreger (53) eine Erregerspule (37) und/oder die mindestens zwei Schwingungssensoren (51, 52) jeweils eine Sensorspule (39) umfassen,
wobei der mindestens eine Schwingungserreger (53) einen Erregermagneten (36) und/oder die mindestens zwei Schwingungssensoren (51, 52) jeweils einen Sensormagneten (38) umfassen,
wobei der Erregermagnet (36) und/oder der Sensormagnet (38) an der Messrohrleitung (10) angeordnet ist,
wobei sich der Erregermagnet (36) durch eine Spulenöffnung der Erregerspule (37) erstreckt und/oder sich der Sensormagnet (38) durch eine Spulenöffnung der Sensorspule (39) erstreckt,
**dadurch gekennzeichnet, dass** die Spulenöffnung eine elongierte Grundform aufweist,
wobei die Grundform einen Schwerpunkt aufweist, durch den ein größter Durchmesser mit einer Länge *d*₁ und ein kleinster Durchmesser mit einer Länge *d*₂ verläuft,
wobei die Erregerspule (37) und/oder die Sensorspule (39) in einer Querschnittsebene eine erste Spulenachse (A) und eine zweite Spulenachse (B) aufweist,
wobei der größte Durchmesser *d*₁ in der ersten Spulenachse (A) liegt,
wobei der kleinste Durchmesser *d*₂ in der zweiten Spulenachse (B) liegt,
wobei für einen Quotienten *d*₁/*d*₂ gilt, dass 1,15 ≤ *d*₁/*d*₂, insbesondere 1,5 ≤ *d*₁/*d*₂ und bevorzugt 2 ≤ *d*₁/*d*₂ ist,
wobei die Messrohrleitung (10) derart ausgebildet ist, dass bei einem Schwingen der Messrohrleitung (10) in einer, insbesondere kleinsten In-Plane Mode eine Auslenkungsrichtung der Messrohrleitung (10) in einem Bereich des Erregermagneten (36) und/oder des Sensormagneten (38) parallel zur ersten Spulenachse (A) orientiert ist.

2. Messaufnehmer (100) nach dem vorherigen Anspruch,
wobei für den Quotienten *d*₁/*d*₂ gilt, dass *d*₁/*d*₂ ≤ 10, insbesondere *d*₁/*d*₂ ≤ 7,5 und bevorzugt *d*₁/*d*₂ ≤ 3 ist.

3. Messaufnehmer (100) nach dem Anspruch 2,
wobei der Erregermagnet (36) und/oder der Sensormagnet (38) einen Magnetdurchmesser mit einer Länge *d_{M}* aufweist,
wobei die Länge des Magnetdurchmessers *d_{M}* kleiner ist als die Länge *d*₂ des kleinsten Durchmessers,
wobei für einen Quotienten *d*₂/*d_{M}* gilt, dass 1 *< d*₂/*d_{M}* ≤ 2, insbesondere 1,2 *≤ d*₂/*d_{M}* ≤ 1,8 und bevorzugt 1,3 *≤ d*₂/*d_{M} ≤* 1,4.

4. Messaufnehmer (100) nach einem der vorherigen Ansprüche,
wobei die Messrohrleitung (10) einen zumindest abschnittsweise S-förmigen Verlauf aufweist,
wobei in der Rohrleitungsebene eine Längsachse (Z) existiert, zu welcher die Rohrleitungsachse an keinem Punkt einen Winkel von mehr als 85°, insbesondere nicht mehr als 83° aufweist.

5. Messaufnehmer (100) nach dem Anspruch 4,
wobei die erste Spulenachse (A) die Längsachse (Z) mit einem Winkel *α* schneidet,
wobei der Winkel *α* ein Winkelmaß von 0° bis 15°, insbesondere 4° bis 10° und bevorzugt 6° bis 8° aufweist.

6. Messaufnehmer (100) nach einem der vorherigen Ansprüche, umfassend:
- ein Tragsystem mit einer Trägerplatte (30), mindestens einem einlaufseitigen Lagerkörper (21) und mindestens einem auslaufseitigen Lagerkörper (22),
wobei das Tragsystem Tragsystemschwingungsmoden aufweist die elastische Verformungen der Trägerplatte (30) umfassen,
wobei die Messrohrleitung (10) mittels des einlaufseitigen Lagerkörpers (21) und mittels des auslaufseitigen Lagerkörpers (22) mit der Trägerplatte (30) fest verbunden und durch die Lagerkörper (21, 22) begrenzt ist.

7. Messaufnehmer (100) nach dem Anspruch 6,
wobei eine Verbindungsachse (V) den mindestens einen einlaufseitigen Lagerkörper (21) und den mindestens einen auslaufseitigen Lagerkörper (22) verbindet,
wobei die erste Spulenachse (A) die Verbindungsachse (V) mit einem Winkel β schneidet,
wobei der Winkel β ein Winkelmaß von 0° bis 30°, insbesondere 4° bis 20° und bevorzugt 6° bis 10° aufweist.

8. Messaufnehmer nach Anspruch 6 oder einem davon abhängigen Anspruch,
wobei die Messrohrleitung (10) zwischen den beiden Lagerkörpern (21, 22) zwei äußere gerade Abschnitte (11, 12) und einen zentralen geraden Abschnitt (13) aufweist, die durch zwei kreisbogenförmige Abschnitte (15, 16) verbunden sind,
wobei die beiden Lagerkörper (21, 22) jeweils an den äußeren geraden Abschnitten angeordnet sind.

9. Messaufnehmer nach Anspruch 6 oder einem davon abhängigen Anspruch,
wobei die Eigenfrequenzen der Translationsschwingungsfreiheitsgrade und Rotationsschwingungsfreiheitsgrade der Trägerplatte (30) nicht weniger als 100 Hz insbesondere nicht weniger als 150 Hz und/oder nicht weniger als 200 Hz betragen.

10. Messaufnehmer (100) nach einem der vorherigen Ansprüche,
wobei der größte Durchmesser so gewählt ist, dass bei einem Schwingen der Messrohrleitung (10) in der niedrigsten In-Plane Mode der Erregermagnet (36) kollisionsfrei in der Spulenöffnung der Erregerspule (37) schwingt und/oder der Sensormagnet (38) kollisionsfrei in der Spulenöffnung der Sensorspule (39) schwingt.

11. Messaufnehmer (100) nach einem der vorherigen Ansprüche,
wobei die niedrigste In-Plane Mode in einem Frequenzbereich von kleiner 1000 Hz, insbesondere kleiner 300 Hz liegt.

## Claims

1. A vibronic sensor (100) for measuring the mass flow of a flowable medium, comprising:
- A line inlet section (18);
- a line outlet section (19);
- a measuring pipe capable of oscillating (10) for conducting the medium,
wherein the measuring pipe (10) is bent in one pipe plane in its idle position,
wherein the measuring pipe (10) connects to the line inlet section (18) on the inlet side and to the line outlet section (19) on the outlet side, and can be connected to a pipeline by means of the line outlet section;
- a sensor housing (40),
wherein the line inlet section (18) and the line outlet section (19) are both securely connected to the sensor housing (40);
- at least one oscillation exciter (53) for exciting bending oscillations of the measuring pipe (10) in a bending oscillation useful mode; and
- at least two oscillation sensors (51, 52) for detecting oscillations of the measuring pipe (10),
wherein the at least one oscillation exciter (53) comprises an excitation coil (37) and/or the at least two oscillation sensors (51, 52) each comprise one sensor coil (39),
wherein the at least one oscillation exciter (53) comprises an excitation magnet (36) and/or the at least two oscillation sensors (51, 52) each comprise a sensor magnet (38),
wherein the excitation magnet (36) and/or the sensor magnet (38) is/are arranged on the measuring pipe (10),
wherein the excitation magnet (36) extends through a coil opening in the excitation coil (37) and/or the sensor magnet (38) extends through a coil opening in the sensor coil (39),
**characterized in that** the coil opening has an elongated basic shape,
wherein the basic shape has a center of mass through which a largest diameter with a length d1 and a smallest diameter with a length d2 pass,
wherein the excitation coil (37) and/or the sensor coil (39) has/have a first coil axis (A) and a second coil axis (B) in a cross-sectional plane,
wherein the largest diameter *d₁* is located in the first coil axis (A),
wherein the smallest diameter *d₂* is located in the second coil axis (B), wherein the following applies for a quotient *d₁*l*d₂*: *1.15 ≤ d₁*/*d₂*, in particular *1.5 ≤ d₁*/*d₂*, and preferably *2 ≤ d₁*/*d₂,*
wherein the measuring pipe (10) is configured in such a way that, when the measuring pipe (10) oscillates in an in-plane mode, in particular the lowest in-plate mode, a deflection direction of the measuring pipe (10) is oriented in an area of the excitation magnet (36) and/or the sensor magnet (38) parallel to the first coil axis (A).

2. The sensor (100) as claimed in the preceding claim,
wherein the following applies for the quotient *d₁*/*d₂: d₁*/*d₂* ≤ *10,* in particular *d₁*/*d₂ ≤ 7.5,* preferably *d₁*/*d₂ ≤ 3.*

3. The sensor (100) as claimed in claim 2,
wherein the excitation magnet (36) and/or the sensor magnet (38) has/have a magnet diameter with a length *d_{M},*
wherein the length of the magnet diameter *d_{M}* is less than the length *d*₂ of the smallest diameter,
wherein the following applies for a quotient *d₂*/*d_{M}*: *1 < d₂*/*d_{M},* in particular *1.2 ≤ d₂*/*d_{M}* ≤ *1.8,*
and preferably *1.3 ≤ d*₂/*d_{M} ≤ 1.4.*

4. The sensor (100) as claimed in one of the preceding claims,
wherein the measuring pipe (10) is routed in such a way that it is S-shaped at least in sections,
wherein a longitudinal axis (Z) exists in the pipe plane, to which the pipe axis at no point has an angle of more than 85°, in particular no more than 83°.

5. The sensor (100) as claimed in claim 4,
wherein the first coil axis (A) intersects the longitudinal axis (Z) at an angle *α*,
wherein the angle *α* has an angular dimension from 0° to 15°, in particular 4° to 10°, and preferably 6° to 8°.

6. The sensor (100) as claimed in one of the preceding claims, comprising:
- A support system with a support plate (30), at least one inlet-side bearing body (21), and at least one outlet-side bearing body (22),
wherein the support system has support system oscillation modes, which comprise the elastic deformation of the support plate (30),
wherein the measuring pipe (10) is securely connected to the support plate (30) by means of the inlet-side bearing body (21) and by means of the outlet-side bearing body (22), and is bounded by the bearing bodies (21, 22).

7. The sensor (100) as claimed in claim 6,
wherein a connecting axis (V) connects the at least one inlet-side bearing body (21) and the at least one outlet-side bearing body (22),
wherein the first coil axis (A) intersects the connecting axis (V) at an angle *β*,
wherein the angle *β* has an angular dimension from 0° to 30°, in particular 4° to 20°, and preferably 6° to 10°.

8. The sensor as claimed in claim 6 or a dependent claim,
wherein the measuring pipe (10) has, between the two bearing bodies (21, 22), two outer straight sections (11, 12) and a central straight section (13), which are connected by means of two arc-shaped sections (15, 16),
wherein the two bearing bodies (21, 22) are both arranged on the outer straight sections.

9. The sensor as claimed in claim 6 or a dependent claim,
wherein the natural frequencies of the translational oscillation degrees of freedom and rotational oscillation degrees of freedom of the support plate (30) are not less than 100 Hz, in particular not less than 150 Hz, and/or not less than 200 Hz.

10. The sensor (100) as claimed in one of the preceding claims,
wherein the largest diameter is selected in such a way that, when the measuring pipe (10) oscillates in the lowest in-plane mode, the excitation magnet (36) oscillates in the coil opening of the excitation coil (37) without colliding and/or the sensor magnet (38) oscillates in the coil opening of the sensor coil (39) without colliding.

11. The sensor (100) as claimed in one of the preceding claims,
wherein the lowest in-plane mode is in a frequency range of less than 1000 Hz, in particular less than 300 Hz.

## Revendications

1. Capteur vibronique (100) destiné à la mesure du débit massique d'un produit fluide, lequel capteur comprend :
- une section d'entrée de tube (18) ;
- une section de sortie de tube (19) ;
- un tube de mesure apte à vibrer (10) destiné à guider le produit,
le tube de mesure (10) étant courbé dans sa position de repos dans un plan de tube,
le tube de mesure (10) étant raccordé côté entrée à la section d'entrée de tube (18) et côté sortie à la section de sortie de tube (19), et lequel tube pouvant être raccordé à une conduite par l'intermédiaire de ladite section de sortie de tube ;
- un boîtier de capteur (40),
la section d'entrée de tube (18) et la section de sortie de tube (19) étant respectivement reliées de manière fixe au boîtier de capteur (40) ;
- au moins un excitateur de vibrations (53) destiné à générer des vibrations de flexion du tube de mesure (10) dans un mode utile de vibrations de flexion ; et
- au moins deux capteurs de vibrations (51, 52) destinés à mesurer les vibrations du tube de mesure (10),
l'au moins un excitateur de vibrations (53) comprenant une bobine d'excitation (37) et/ou les au moins deux capteurs de vibrations (51 , 52) comprenant chacun une bobine de détection (39),
l'au moins un excitateur de vibrations (53) comprenant un aimant d'excitation (36) et/ou les au moins deux capteurs de vibrations (51, 52) comprenant chacun un aimant de détection (38),
l'aimant d'excitation (36) et/ou l'aimant de détection (38) étant disposé(s) sur le tube de mesure (10),
l'aimant d'excitation (36) s'étendant à travers une ouverture de la bobine d'excitation (37) et/ou l'aimant de détection (38) s'étendant à travers une ouverture de la bobine de détection (39),
**caractérisé en ce que** l'ouverture de bobine présente une forme de base allongée,
ladite forme de base comprenant un centre de gravité à travers lequel passent un plus grand diamètre d'une longueur *d₁* et un plus petit diamètre d'une longueur *d₂,*
la bobine d'excitation (37) et/ou la bobine de détection (39) présentant, dans un plan de section transversale, un premier axe de bobine (A) et un deuxième axe de bobine (B),
le plus grand diamètre *d₁* étant situé dans le premier axe de bobine (A),
le plus petit diamètre d2 étant situé sur le deuxième axe de bobine (B),
la relation suivante étant valable pour un quotient *d₁*/*d₂* : 1,15 ≤ *d₁*/*d₂*, notamment 1,5 ≤ *d₁*/*d₂* et de préférence 2 ≤ *d₁*/*d₂*,
le tube de mesure (10) étant conçu de telle sorte que, lors d'une vibration du tube de mesure (10) dans un mode plan (« In-Plane »), notamment dans le mode plan le plus bas, une direction de déviation du tube de mesure (10) est orientée parallèlement au premier axe de bobine (A) dans une zone de l'aimant d'excitation (36) et/ou de l'aimant de détection (38).

2. Capteur (100) selon la revendication précédente,
pour lequel le quotient *d₁*/*d₂* est tel que *d₁*/*d₂* ≤ 10, notamment *d₁*/*d₂* ≤ 7,5 et de préférence *d₁*/*d₂* ≤ 3.

3. Capteur (100) selon la revendication 2,
pour lequel l'aimant d'excitation (36) et/ou l'aimant de détection (38) présente un diamètre d'aimant avec une longueur *d_{M}*,
pour lequel la longueur du diamètre de l'aimant *d_{M}* est inférieure à la longueur d₂ du plus petit diamètre,
la relation suivante étant valable pour un quotient *d₂*/*d_{M}* : 1 *< d₂*/*d_{M}* ≤ *2,* notamment 1,2 ≤ *d₂*/*d_{M} ≤* 1,8 et de préférence 1,3 ≤ *d₂*/*d_{M} ≤* 1,4.

4. Capteur (100) selon l'une des revendications précédentes,
pour lequel le tube de mesure (10) présente un tracé en forme de S au moins par sections,
pour lequel il existe dans le plan de tube un axe longitudinal (Z) par rapport auquel l'axe du tube ne présente en aucun point un angle supérieur à 85°, notamment pas supérieur à 83°.

5. Capteur (100) selon la revendication 4,
pour lequel le premier axe de bobine (A) coupe l'axe longitudinal (Z) avec un angle *α*,
l'angle *α* présentant une cote angulaire de 0° à 15°, notamment de 4° à 10° et de préférence de 6° à 8°.

6. Capteur (100) selon l'une des revendications précédentes, lequel capteur comprend :
- un système de support comprenant une plaque de support (30), au moins un corps de palier côté entrée (21) et au moins un corps de palier côté sortie (22),
le système de support présentant des modes de vibration du système de support qui comprennent des déformations élastiques de la plaque de support (30),
le tube de mesure (10) étant relié de manière fixe à la plaque de support (30) au moyen du corps de palier côté entrée (21) et au moyen du corps de palier côté sortie (22) et lequel tube de mesure est délimité par les corps de palier (21, 22).

7. Capteur (100) selon la revendication 6,
pour lequel un axe de liaison (V) reliant l'au moins un corps de palier côté entrée (21) et l'au moins un corps de palier côté sortie (22),
le premier axe de bobine (A) coupant l'axe de liaison (V) avec un angle *ß*,
l'angle *ß* présentant une cote angulaire de 0° à 30°, notamment de 4° à 20° et de préférence de 6° à 10°.

8. Capteur (100) selon la revendication 6 ou une revendication dépendante de celle-ci,
pour lequel le tube de mesure (10) présente, entre les deux corps de palier (21, 22), deux sections droites extérieures (11, 12) et une section droite centrale (13), lesquelles sections sont reliées par deux sections en arc de cercle (15, 16),
les deux corps de palier (21, 22) étant respectivement disposés sur les sections droites extérieures.

9. Capteur (100) selon la revendication 6 ou une revendication dépendante de celle-ci,
pour lequel les fréquences propres des degrés de liberté de vibration en translation et des degrés de liberté de vibration en rotation de la plaque de support (30) ne sont pas inférieures à 100 Hz, notamment pas inférieures à 150 Hz et/ou pas inférieures à 200 Hz.

10. Capteur (100) selon l'une des revendications précédentes,
pour lequel le plus grand diamètre est choisi de telle sorte que, lors d'une vibration du tube de mesure (10) dans le mode plan (« In-Plane ») le plus bas, l'aimant d'excitation (36) vibre sans collision dans l'ouverture de la bobine d'excitation (37) et/ou l'aimant de détection (38) vibre sans collision dans l'ouverture de la bobine de détection (39).

11. Capteur (100) selon l'une des revendications précédentes,
pour lequel le mode plan (« In-Plane ») le plus bas se situe dans une gamme de fréquences inférieure à 1 000 Hz, notamment inférieure à 300 Hz.
